## Europäisches Patentamt
## European Patent Office
## Office européen des brevets

(11) Veröffentlichungsnummer: **0 245 405 B1**

# EUROPÄISCHE PATENTSCHRIFT

(45) Veröffentlichungstag der Patentschrift: **27.05.92**

(21) Anmeldenummer: **86906820.5**

(22) Anmeldetag: **17.11.86**

(86) Internationale Anmeldenummer:
**PCT/EP86/00662**

(87) Internationale Veröffentlichungsnummer:
**WO 87/02902 (21.05.87 87/11)**

(51) Int. Cl.5: **B01D 1/26**, B01D 1/28,
B01D 1/22, B01D 3/06,
C02F 1/08

(54) **VERFAHREN UND VORRICHTUNG ZUR DESTILLATION VON SÜSSWASSER AUS MEERWASSER.**

(30) Priorität: **16.11.85 DE 3540730**

(43) Veröffentlichungstag der Anmeldung:
**19.11.87 Patentblatt 87/47**

(45) Bekanntmachung des Hinweises auf die
Patenterteilung:
**27.05.92 Patentblatt 92/22**

(84) Benannte Vertragsstaaten:
**AT BE CH DE FR GB IT LI LU NL SE**

(56) Entgegenhaltungen:
**DE-A- 3 239 816**
**FR-A- 2 261 796**
**FR-A- 2 442 886**

(73) Patentinhaber: **NASSER, Mohamed**
**Eichenstrasse 6**
**W-8034 Germering(DE)**

(72) Erfinder: **NASSER, Mohamed**
**Eichenstrasse 6**
**W-8034 Germering(DE)**

(74) Vertreter: **Grosse, Wolfgang et al**
**Patentanwälte Herrmann-Trentepohl, Kirschner Grosse, Bockhorni & Partner Forstenrieder Allee 59**
**W-8000 München 71(DE)**

## Beschreibung

Die Erfindung betrifft ein Verfahren zur Destillation von Süßwasser aus Meerwasser durch Filmverdampfung in einem mehrstufigen VTE-Prozeß, wobei das Meerwasser nach Durchlaufen der ersten VTE-Prozeß-Stufe jeweils vor Eintritt in die nächstfolgende VTE-Prozeßstufe über eine Staustelle geführt und dabei in mindestens je einer MSF-Prozeß-Stufe einer Entspannungsverdampfung unterworfen wird, wobei das jeweilige Süßwasser-Destillat und das jeweilige Sole-Kondensat alle nachfolgenden VTE-Prozeß- und MSF-Prozeß-Stufen gemeinsam durchlaufen derart, daß der letzten MSF-Prozeß-Stufe das Sole-Kondensat und der letzten VTE-Prozeß-Stufe das Süßwasser-Destillat entnommen werden können, wobei der zur Aufheizung des Meerwassers dienende Dampf mit der ersten VTE-Prozeß-Stufe beginnend durch alle Verdampfungsstufen nacheinander geführt und dabei mit den Dampfanteilen zumindest aus den anfänglichen VTE-Prozeß-Stufen vermischt wird, und wobei bei der stufenweisen Verdampfung anfallende Inertgase abgesaugt werden.

Unter einem VTE- (Vertical Tube Evaporation) Prozeß wird ein mehrstufiger Filmverdampfungs-Prozeß verstanden, bei dem das zu verdampfende Meerwasser durch über Primärdampf aufgeheizte Rohrbündel-Wärmetauscher geführt wird. Unter einem MSF⁻(Multiple-Stage-Flash-Evaporation) Prozeß wird ein mehrstufiger Entspannungs-Verdampfungsprozeß verstanden, bei dem das zu verdampfende heiße Meerwasser zahlreiche, in ihren unteren Teilen Wehre und Durchlässe aufweisende Entspannungskammern durchströmt. In den oberen Teilen der Entspannungskammern sind die vom zufließenden Meerwasser durchflossenen Rohre des Vorwärmers angebracht, an denen der Dampf kondensiert wird. Aus der letzten Entspannungskammer kann das Süßwasser-Destillat und das Sole-Kondensat entnommen werden; vergleiche Ullmann, Enzyklopädie der Chemie, 3. Auflage, 18. Band, Seite 465.

Ein Verfahren und eine Vorrichtung der oben beschriebenen Art sind durch die DE-OS 32 39 816 bekannt geworden. Bei der bekannten Vorrichtung wird das vorgewärmte Meerwasser in einem mehrstufigen Prozeß nach Durchlaufen der ersten VTE-Prozeß-Stufe jeweils vor Eintritt in die nächstfolgende VTE-Prozeß-Stufe über eine Staustelle geführt und dabei in mindestens je einer MSF-Prozeß-Stufe einer Entspannungsverdampfung unterworfen. Dabei durchlaufen das jeweilige Süßwasser-Destillat und das jeweilige Sole-Kondensat alle nachfolgenden VTE-Prozeß- und MSF-Prozeß-Stufen gemeinsam derart, daß der letzten MSF-Prozeß-Stufe das Solekondensat und der letzten VTE-Prozeß-Stufe das Süßwasser-Destillat entnommen werden können. Der der Aufheizung des Meerwassers dienende Dampf wird, ausgehend von der ersten VTE-Prozeß-Stufe durch alle Verdampfungsstufen nacheinander geführt und dabei mit den Dampfanteilen zumindest aus den anfänglichen VTE-Prozeß-Stufen vermischt. Die bei der stufenweisen Verdampfung anfallenden Inertgase werden pro Stufe abgesaugt und das Sole-Kondensat der niederdruckseitigen VTE-Prozeß-Stufen wird jeweils in mehreren MSF-Prozeß-Stufen pro VTE-Stufe entspannt. Um eine Verschlechterung des Wirkungsgrades des Destillationsprozesses zu vermeiden, muß eine ständige Inertgasabsaugung aus der in der geometrischen Mitte der VTE-Prozeßstufe angeordneten prägefreien Zone erfolgen, welche die spaltähnlichen horizontal ausgerichtet liegenden und für die Heizdampfführung dienenden Kanäle miteinander verbindet. Die bei jeder Entspannung und Kondensation anfallenden Inertgase werden bei der vorbekannten Vorrichtung aus jeder Stufe an zwei Stellen abgesaugt, wobei die Absaugung an den Endpunkten des Kondensationsvorganges erfolgt. Die im VTE-Prozeß-Teil anfallenden Inertgase werden durch einen Hohlraum zwischen den Leitblechen einer Seitenwand des die VTE- und MSF-Prozeß-Stufen aufnehmenden Behälters entlang des jeweils untersten Spaltquerschnittes des Fallfilm-Verdampfers, ausgehend von der Mitte (Kondensationsende) jeder Wärmeaustauschfläche, abgesaugt. Dagegen werden die anfallenden Inertgase beim Kondensationsvorgang am Vorwärmer ebenfalls über Stutzen an der gegenüberliegenden beweglichen Seitenwand des Behälters über einen Hohlraum zwischen dem Vorwärmer und der Seitenwand am Endpunkt der Kondensation abgesaugt.

Bei der Absaugung aus der VTE-Prozeß-Stufe ergibt sich der Nachteil, daß das in Richtung zum Rohwasser-Vorwärmer abfließende Süßwasser-Destillat in entgegengesetzter Richtung zu dem abgesaugten Gemisch aus Inertgasen und Restdampf strömt. Damit das Süßwasser-Destillat abfließen kann, ist deshalb ein größerer Niveauunterschied erforderlich, was verständlicherweise den Nachteil mit sich bringt, daß größere Wärmetauscherflächen abgedeckt werden und damit für den Wärmetausch verlorengehen. Ferner ergibt sich durch das Gegenstromprinzip eine verschlechterte Spülung der prägungsfreien Zone von Inertgasen, so daß ein größerer Dampfdurchsatz erforderlich ist. Ein weiterer Nachteil besteht darin, daß mit der Absaugung des Inertgases Restdampf verlorengeht, welcher nicht zur Vorwärmung des Rohwassers ausgenutzt werden kann. Schließlich ist die Absaugung des Inertgases aufwendig, da diese an zwei getrennt voneinander angeordneten Stellen erfolgt.

Ein weiterer Nachteil der vorbekannten Anlage besteht darin, daß diese mit einem relativ hohen Temperaturniveau gefahren wird. So beträgt die Eintrittstemperatur des Primärdampfes am Eintrittsquerschnitt der ersten VTE-Prozeß-Stufe ca. 132°C, während das der ersten VTE-Prozeß-Stufe zugeleitete Meerwasser eine Temperatur von ca. 130°C aufweist. Der zur Erzielung dieser Temperaturen benötigte Energieaufwand ist erheblich. Es ergibt sich bei diesem hohen Temperaturniveau ferner der Nachteil, daß die Rohwasseraufbereitung aufwendig ist, da dem Rohwasser chemische Zusätze zugesetzt werden, um eine bei diesen hohen Temperaturen auftretende Ausfällung von Härtebildnern, wie beispielsweise Calciumcarbonat und Magnesiumhydroxid auf einem Minimum zu halten.

Der bei der letzten VTE-Prozeß-Stufe austretende Kondensat - bzw. Brüdendampf wird bei dem bekannten Fallfilmverdampfer auskondensiert und als Verlustdampf in die Atmosphäre abgeleitet. Es ist deshalb notwendig, dem bekannten Fallfilmverdampfer ständig Primärdampf in der ersten VTE-Prozeß-Stufe zuzuleiten, welcher in einer separaten Dampferzeugungsanlage erzeugt werden muß.

Bezüglich der Konstruktion der bekannten Anlage bestehen Nachteile darin, daß eine erhebliche Anzahl von VTE-Prozeß- und MSF-Prozeß-Stufen erforderlich sind, um eine entsprechende Leistung der Anlage zu gewährleisten. Da die einzelnen Stufen übereinander angeordnet sind, ergibt sich eine turmartige Vorrichtung erheblicher Abmessungen. Die Vielzahl der eingesetzten Prozeßstufen erfordert eine aufwendige Steuerung und Überwachung des gesamten Systems.

Der Erfindung liegt daher die Aufgabe zugrunde, das bekannte Verfahren und die zur Durchführung des Verfahrens dienende Vorrichtung derart zu verbessern, daß die vorgenannten Nachteile vermieden werden, insbesondere jedoch die Gesamtanlage verkleinert und möglichst aus standardisierten Einzelteilen zusammengesetzt ist, so daß eine individuelle Anpassung an die Bedürfnisse der Betreiber jederzeit ermöglicht ist. Die Anlage soll eine vereinfachte Steuerung und Überwachung des Betriebs ermöglichen und bei einer zu der bekannten Anlage vergleichbaren Leistung durch Verringerung des Temperaturniveaus sowie der auftretenden Dampfverluste eine Verringerung des Primärdampfbedarfs ermöglichen. Schlielich wird eine größere Ausnutzung der Heizfläche der VTE-Prozeß- und MSF-Prozeß-Stufen sowie eine Verbesserung der Inertgasabsaugung angestrebt.

Ausgehend von dem Verfahren zur Destillation von Süßwasser aus Meerwasser durch Filmverdampfung in einem mehrstufigen VTE-Prozeß gemäß der DE-OS 32 39 816 wird die vorgenannte Aufgabe dadurch gelöst, daß ein im Anspruch 1 gekennzeichnetes Verfahren verwendet wird. Schritte und Zwischenschritte des erfindungsgemäßen Verfahrens sind in den Unteransprüchen 2 - 6 näher erläutert.

Die zur Lösung der Aufgabe und zur Durchführung des erfindungsgemäßen Verfahrens erforderliche Vorrichtung ist in Anspruch 7 gekennzeichnet. Vorteilhafte Ausgestaltungen der erfindungsgemäßen Vorrichtung ergeben sich aus den Unteransprüchen 8 - 15. Die Kombination der beiden an sich bekannten Prozesse zu einem einzigen Verdampfungsprozeß ermöglicht nicht nur eine optimale Ausnutzung der zugeführten Verdampfungsenergie, sondern führt auch zu einer überaus einfachen konstruktiven Gestaltung der Kolonnen, wenn für Vorwärmer und Fallfilm-Verdampfer geprägte, ebene Wärmetauscher-Platten benutzt werden, die die Realisierung einer beliebig hohen Stufenzahl für die Ausnützung eines zur Verfügung stehenden Temperatur- und Druckgefälles und eine einfache austauschbare Unterbringung in einem gemeinsamen senkrecht stehenden Druckbehälter ermöglicht. Die zwischengeschalteten MSF-Prozeß-Stufen lassen sich dabei als geeignet gebogene Leitbleche ausbilden, die gleichzeitig als Begrenzungen für die unterschiedliche Druckhöhen aufweisenden Druckräume dienen. Die ebenfalls im druckdichten Behälter vertikal angeordnete Vorwärmer schließt mit seinen Heizflächen direkt an die Dampfräume der einzelnen VTE- und MSF-Prozeß-Stufen an.

Gegenüber der durch die DE-OS 32 39 816 bekannt gewordenen Vorrichtung zur Destillation von Süßwasser ist die erfindungsgemäße Vorrichtung in ihren äußeren Abmessungen erheblich verkleinert. Es finden lediglich drei VTE-MSF-Prozeß-Stufen Anwendung. Die einzelnen Bauteile sind standardisiert und können in Abhängigkeit von der durch die Betreiber gewünschten Leistung in der Tiefe gestapelt und durch zusätzliche Verdichtereinheiten gleicher Standardisierung erweitert werden.

Durch die Wiederverwendung des aus der letzten VTE-Prozeß-Stufe austretenden Brüdendampfes, der gemäß der Erfindung von Solepartikeln gereinigt und auf das für die erste Stufe ausgelegte Temperatur- und Druckniveau gebracht wird, wird erreicht, daß die erfindungsgemäße Anlage gegenüber der vorbekannten Anlage in einem wesentlich niedrigeren Temperaturniveau gefahren werden kann, was die Vorteile einer vereinfachten Steuerung des Gesamtsystems, einer weniger aufwendigen Rohwasser-Aufbereitung und einen verbesserten Wirkungsgrad der Anlage mit sich bringt. Darüber hinaus wird die Lebensdauer der Anlage verbessert und der Wartungsaufwand verringert. Die für den Ausgleich von Leckverlusten und Produktdampfverlusten benötigte Primärdampfmenge kann verringert werden, so daß gegenüber der bekannten Anlage Primärenergie eingespart wird. Es ergibt sich ferner der Vorteil, daß durch die in der gleichen Strömungsrichtung erfolgende Ableitung des Süßwasserdestillats und der Inertgase mit dem aus Destillat-, bzw. Kondensat und Primärdampf bestehenden Restdampf eine Verbesserung der Spülung der VTE-Prozeß-Stufen sowie eine verbesserte Ableitung des Süßwasser-Destillats und schließlich eine verbesserte Ausnutzung des Restdampfes in der entsprechenden Rohwasser-Vorwärmstufe erzielt werden. Durch diese verbesserte Abführung des Süßwasser-Destillats ist ein im Vergleich zu der bekannten Vorrichtung geringeres Wasserniveau möglich, so daß größere Wärmetauscherflächen für den Wärmetausch zur Verfügung stehen. Schließlich wird auch die Absaugung der Inertgase insgesamt dadurch vereinfacht, daß diese nur noch an einer Stelle, nämlich am Endpunkt der Kondensation abgesaugt werden.

Weitere vorteilhafte Merkmale und Ausgestaltungen des Gegenstandes der Erfindung ergeben sich aus der nachfolgenden Beschreibung eines bevorzugten Ausführungsbeispiels anhand der Zeichnung. Darin zeigen:

Fig. 1     ein Flußdiagramm der erfindungsgemäßen Vorrichtung zur Destillation von Süßwasser aus Meerwasser;

Fig. 2     eine schematische Schnittdarstellung durch die VTE-Stufen und MST-Stufen des erfindungsgemäßen Fallfilm-Verdampfers, und

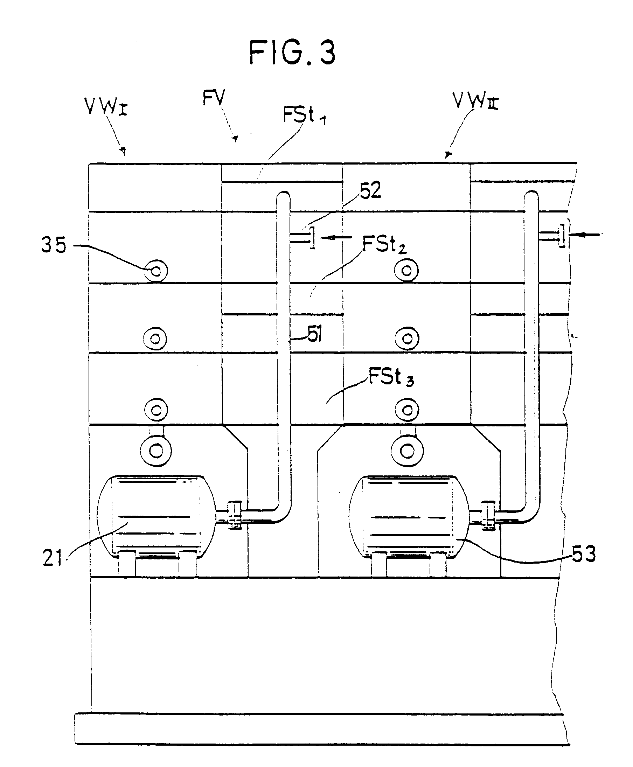

Fig. 3     eine schematische Seitenansicht der in der Fig. 2 dargestellten Vorrichtung.

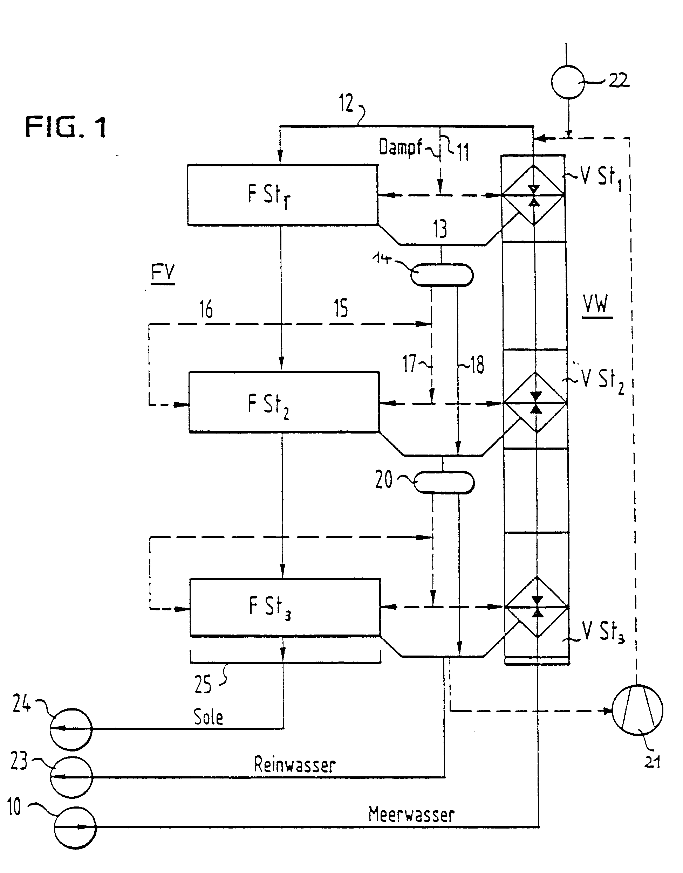

Wie das in Fig. 1 dargestellte Flußdiagramm zeigt, wird das mittels einer Pumpe 10 zugeführte kalte Meerwasser über einen mit kondensierendem Dampf beheizten vielstufigen - Stufen $VSt_1$ bis $VSt_3$ - vertikalen Rohwasservorwärmer VW vorgewärmt und anschließend mittels eines ebenfalls mit kondensierendem Dampf beheizten vielstufigen - Stufen $FSt_1$ bis $FSt_3$ - vertikalen Fallfilm-Verdampfers FV verdampft. Hierzu wird der ersten Stufe $FSt_1$, die die erste VTE-Prozeß-Stufe des Verfahrens bildet, über eine Leitung 11 Primärdampf zugeführt, der gleichzeitig auch der Beheizung der obersten Stufe $VSt_1$ des Vorwärmers dient. Das vorgewärmte Meerwasser gelangt über einen überlauf 12 in die erste Stufe $FSt_1$ des Fallfilmverdampfers FV und von dort jeweils zu der benachbarten nächsten Stufe und sofort, bis alle Stufen $FSt_1$ bis $FSt_3$ durchgelaufen sind. Der in der ersten Stufe gebildete Dampf sowie der Dampfanteil, der durch Entspannung des Kondensats aus der ersten Stufe bei 14 entsteht, dient der Beheizung der zweiten Stufe $FSt_2$ des Fallfilm-Verdampfers sowie der zugeordneten Stufe $VSt_1$ bis $VSt_3$ des Vorwärmers, wie dies durch die Verbindungen 15, 16 und 17 gezeigt ist. In gleicher Weise sind die folgenden jeweils einander zugehörigen Stufen des Fallfilm-Verdampfers und Rohwasser-Vorwärmers miteinander verbunden, so daß sich der Prozeß in jeder Stufe wiederholt. Der in der letzten Stufe $FSt_3$

verbleibende Dampf wird über einen nicht dargestellten Demistor einem Verdichter 21 zugeleitet und über eine Druckleitung der ersten VTE-Prozeß-Stufe wieder zugeleitet. Über die Einrichtung 22 wird in die Druckleitung Wasser eingespritzt.

Während bei dem bekannten Fallfilmverdampfer der in der letzten Stufe $FSt_n$ verbleibende Dampf kondensiert und gemeinsam mit dem Süßwasser-Destillat durch eine Pumpe abgepumpt wird, wird der bei der erfindungsgemäßen Vorrichtung in der letzten Stufe $FSt_3$ austretende Brüdendampf einer mechanischen Brüdenverdichtung unterzogen, wobei die Dampftemperatur z.B. von einer Austrittstemperatur von 70°C auf eine Temperatur von etwa 76 bis 80°C erhöht wird, während der Druck entsprechend dem Mollier-Diagramm ansteigt. Dieser Dampf wird wieder der ersten Stufe $FSt_1$ als Heizdampf zugeleitet. Da der als Sattdampf abgesaugte Brüdendampf durch die Verdichtung mittels des Verdichters 21 überhitzt wird, ist es allerdings erforderlich, daß dem überhitzten Dampf Wasser zugesetzt wird, bis ein gesättigter Dampf erzielt wird. Dies geschieht auf dem Weg des Dampfes von der Verdichterdruckseite zur Eintrittsseite in die erste Stufe entweder in der Verdichtermaschine selbst oder in der Leitung vom Verdichter zur Eintrittsseite oder im Eintrittsbereich der ersten VTE-Prozeß-Stufe. Im Vergleich zu dem bekannten Fallfilm-Verdampfer ist die Ausgangstemperatur des der ersten VTE-Stufe zugeführten Rohwassers erheblich niedriger, was den Vorteil mit sich bringt, daß die Rohwasser-Aufbereitung vereinfacht wird, d.h. es müssen dem Meerwasser weniger chemische Zusätze zugesetzt werden, da bei der niedrigeren Temperatur eine Ausfällung von Härtebildnern, wie beispielsweise Calciumcarbonat und Magnesiumhydroxid kaum auftritt.

Der Rohwasser-Vorwärmer VW als auch der die VTE-Prozeß-Stufen umfassende Fallfilm-Verdampfer FV sind aus geprägten Wärmetauscherplatten aufgebaut, die in Längs- und Querrichtung rasterförmig ausgerichtete und gleichmäßig angeordnete Sicken aufweisen. Diese Wärmetauscherplatten sind jeweils paarweise spiegelbildlich aufeinanderliegend derart zusammengefaßt, daß die in der einen Richtung orientierten Sicken eines Wärmetauscher-Plattenpaares rohrähnliche Kanäle bilden, und die in der anderen Richtung orientierten Sicken mit der benachbarten Wärmetauscher-Platte des benachbarten Wärmetauscher-Plattenpaares spaltähnliche Kanäle begrenzen. Dabei ist vorgesehen, daß den den Rohwasser-Vorwärmer bildenden Wärmetauscher-Platten rohrseitig Dampf und spaltseitig Wasser, den den Fallfilm-Verdampfer bildenden Wärmetauscher-Platten dagegen rohrseitig Wasser und spaltseitig Dampf zugeleitet wird. Die rohrähnlichen Kanäle des Fallfilm-Verdampfers sind vertikal ausgerichtet und bilden die Mantelflächen für die Filmverdampfung des zugeführten Rohwassers, während die für die Heizdampfführung vorgesehenen Kanäle horizontal ausgerichtet sind, und in der geometrischen Mitte des Fallfilm-Verdampfers in eine sie miteinander verbindende prägefreie Zone münden. Auf diese Art und Weise können die wärmetauschenden Medien im Kreuzstrom zueinander fließen. Die gestapelten Wärmetauscher-Plattenpaare werden in ihrer Lage mittels Seitenwänden gehalten.

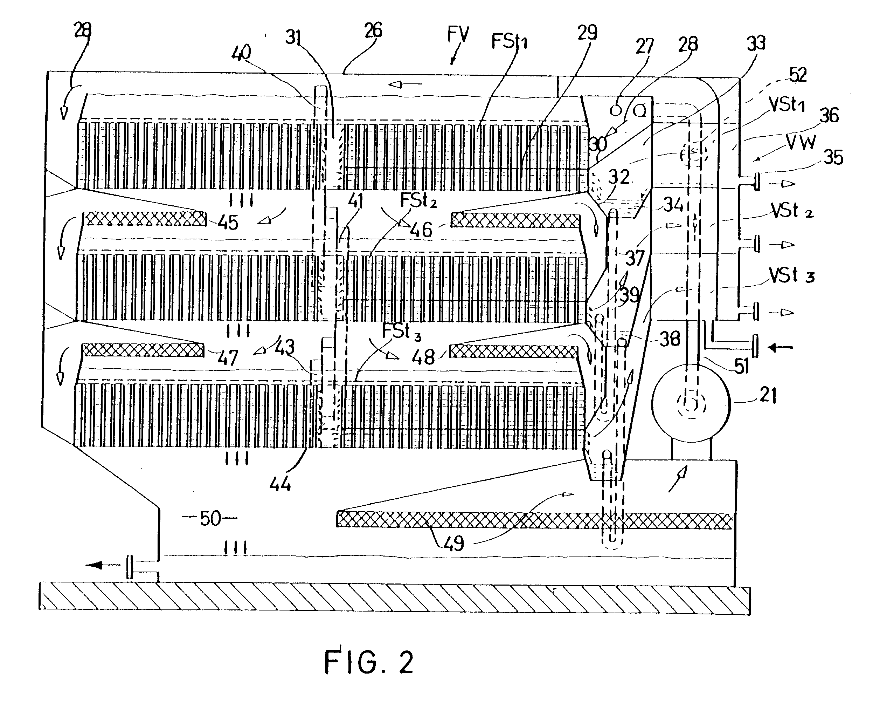

In der Fig. 2 sind in einem Gehäuse 26 des erfindungsgemäßen Fallfilm-Verdampfers FV drei Stufen $FSt_1$ bis $FSt_3$ mit den zugeordneten Stufen $VSt_1$ bis $VSt_3$ aufgenommen. Der Rohwasser-Vorwärmer VW erstreckt sich in vertikaler Richtung und schließt sich mit seinen Heizflächen direkt an die Dampfräume der VTE- und MSF-Prozeß-Stufen an. Wie anhand der obersten Stufe $FSt_1$ zu erkennen ist, strömt der Dampf, welcher zum Anfahren der Anlage und zum Ausgleich von Leckverlusten von Primärdampf in einer getrennten Heizanlage erzeugt wird, durch den Anschluß 27 in den Eintrittsbereich der ersten Stufe $FSt_1$ ein und strömt entlang den Pfeilen 28 in die spaltähnlichen Kanäle an beiden Stirnseiten des Plattenstapels ein.

Während auf der in Bezug auf die Fig. 2 linken Seite der VTE-Prozeß-Stufe der vollständige Querschnitt des Plattenstapels zum Dampfeintritt verfügbar ist, ist auf der in Bezug auf die Fig. 2 rechten Seite der VTE-Prozeß-Stufe ein unterer Teil, bestehend aus drei übereinander angeordneten spaltähnlichen Kanalreihen 29, mittels eines Leitbleches 30 gegenüber dem Dampf 28 abgeschirmt. Der Dampf strömt in Pfeilrichtung bis zu der prägungsfreien Zone 31 in der geometrischen Mitte der VTE-Prozeß-Stufe, wobei das in den einzelnen spaltähnlichen Kanälen anfallende Süßwasser-Destillat in Dampfrichtung mitgeführt und in der prägungsfreien Zone 31 gesammelt wird. Von hier wird das Süßwasser-Destillat zusammen mit dem Destillat- oder Produktdampf über die unteren spaltähnlichen Kanäle 29 sowie Leitbleche 32, die gleichzeitig als Zentrifugal-Tropfenabscheider dienen, in einen Destillat-Entspannungsraum 33 geleitet, welcher der entsprechenden Rohwasser-Vorwärmerstufe $VSt_1$ zugeordnet ist. Während das Süßwasser-Destillat sich in der Produkttasche 34 sammelt, gelangt der Restdampf in die Rohwasser-Vorwärmerstufe $VSt_1$ und wird dort auskondensiert, wobei das Kondensat über ein Leitblech der Produkttasche 34 zugeführt wird.

Die bei jeder Entspannung und Kondensation anfallenden Inertgase werden aus jeder Stufe lediglich am Vorwärmer durch den Stutzen 35 abgesaugt, der sich in einem Hohlraum 36 zwischen dem Vorwärmer VW und der Seitenwand am Endpunkt der Kondensation befindet. Die Inertgas-Saugleistung für die einzelnen Stufen wird durch Drosselventile in den Anschlußleitungen geregelt.

Der Destillat-Entspannungsraum 33 ist gegenüber der nachfolgenden Stufe $FSt_2$ durch das Leitblech 37 verschlossen. Die Produkttasche 34 der ersten Stufe $FSt_1$ ist mit der Produkttasche 38 der zweiten Stufe $FSt_2$ über eine Syphonleitung 39 verbunden. Ebenfalls sind für die Verbindung der einzelnen Fallfilmverdampfer Stufen $FSt_1$, $FSt_2$ und FSt3, Syphonleitungen 40, 41 und 42 vorgesehen, wobei jeweils ein Eintrittsquerschnitt im Bereich des Soleniveaus angeordnet ist und ein Austrittsquerschnitt sich etwa auf halber Höhe des Zwischenraumes zwischen zwei aufeinanderfolgenden Stufen befindet. Der Austrittsquerschnitt 44 der Syphonleitung 43 ist hinter der Stufe $FSt_3$ angeordnet. Auf diese Weise wird dafür gesorgt, daß aus der vorangehenden Stufe austretende Sole nur ein bestimmtes Niveau auf der Oberseite der nachfolgenden Stufe erreichen kann.

Der anfallende Produktdampf wird durch zwischen den einzelnen Stufen zwischengeschaltete Demistoren 45, 46, 47 und 48 gereinigt, bevor er in die nächste VTE-Prozeß-Stufe eintreten kann. Bei diesen Demistoren handelt es sich um Tropfenabscheider bekannter Art, die dafür sorgen, daß mit dem Produktdampf mitgerissene Soletröpfchen zurückgehalten werden. Ein weiterer Demistor 49 ist in der der letzten Stufe $FSt_3$ nachgeschalteten Sammelkammer 50 vorgesehen, so daß der durch den Verdichter 21 abgesaugte Brüdendampf von mitgerissenen Solebestandteilen gereinigt wird. Über die Druckleitung 51 gelangt der verdichtete Brüdendampf mit einer höheren Temperatur wieder in die erste Stufe $FSt_1$, wobei dem Dampf über die Einrichtung 22 z.B. an der Stelle 52 Wasser zugesetzt wird, bis ein gesättigter Dampfzustand erreicht wird.

Um nun auf eine vergleichbare Leistung wie bei der bekannten Vorrichtung zu kommen, sind die einzelnen VTE-Prozeß-Stufen senkrecht zur Zeichenebene durch Stapeln der Plattenwärmetauscher vergrößerbar. Da der Rohwasser-Vorwärmer nicht in gleichem Maße wie der Fallfilmverdampfer zu vergrößern ist, ist es denkbar, daß je nach dem Bedarf der Betreiber mehrere Rohwasservorwärmer VWI und VWII usw. parallelgeschaltet werden. Ebenso können mehrere zugeordnete Verdichter 21, 53 kleinerer Leistung vorgesehen sein. Auf diese Art und Weise ist eine Standardisierung des Systems verwirklichbar, so daß die damit verbundenen Vorteile einer kleineren Lagerhaltung, eines verbesserten Transports, einer erleichterten Montage und Wartung und dergleichen erzielt werden.

Die Vorteile der erfindungsgemäßen Vorrichtung bestehen neben der Verkleinerung der Abmessungen, der Verringerung der Stufen und der Standardisierung von Breite und Höhe sowie der Standardisierung der Verdichter darin, daß die Anlage mit einem niedrigeren Temperaturniveau gefahren werden kann, wodurch die Steuerung des Gesamtsystems sowie die Aufbereitung des Rohwassers vereinfacht werden. Es wird ferner weniger Primärenergie benötigt, da die Aufheizung des Dampfes im wesentlichen nach Anlauf der Anlage nicht mehr thermisch, sondern über die Verdichter mechanisch erfolgt. Die Verdichter haben einen geringeren Energiebedarf als eine Fremd-Heizkraftanlage, bei welcher der Dampf über Heizkessel erzeugt wird.

Die vorgeschriebene Kombination von VTE- und MSF-Prozeß ergibt darüber hinaus Vorteile, die alle gemeinsam zu der bisher nicht für möglich gehaltenen hohen Ausbeute von Destillat (Süßwasser) führen, wobei insbesondere die Benutzung der an sich bekannten Wärmetauscher in Plattenform beiträgt. Durch die gegenüber dem bekannten Fallfilm-Verdampfer veränderte Dampfzuführung und Dampfabführung aus der VTE-Prozeß-Stufe erfolgt die Ableitung des Süßwasser-Destillats und der Inertgase in der gleichen Strömungsrichtung wie der aus Destillat- bzw. Kondensat- und Primärdampf bestehende Restdampf. Dadurch wird zunächst die Ableitung des Süßwasser-Destillats aus den einzelnen spaltähnlichen Kanälen wesentlich verbessert. Für diese Ableitung ist es nicht mehr erforderlich, daß das Süßwasser-Destillat ein hohes Niveau erreicht, sondern es wird aufgrund des Druckgefälles und der Dampfströmung in Richtung zur entsprechenden Rohwasser-Vorwärmerstufe abgeführt. Hiermit ergibt sich gleichzeitig der Vorteil einer verbesserten Ausnutzung der zum Wärmetausch zur Verfügung stehenden Wärmetauscherflächen, die kaum noch durch Süßwasser-Destillat abgedeckt werden. Schließlich ist die Inertgasspülung im Bereich der prägefreien Zone 31 erheblich verbessert, da die Inertgas- und Restdampfführung durch in gleicher Richtung strömendes Süßwasser-Destillat begünstigt wird. Der gesamte Inertgasanteil und Restdampfanteil steht für die Rohwasser-Vorwärmung in der entsprechenden Vorwärmerstufe zur Verfügung, so daß auch hier ein effektiverer Wärmetausch erzielt wird. Schließlich wird die Inertgasabführung dadurch vereinfacht, daß das Absaugen des Inertgases nur noch an einer Stelle am Endpunkt der Kondensation der Vorwärmerstufe erfolgt.

## Patentansprüche

1. Verfahren zur Destillation von Süßwasser aus Meerwasser durch Filmverdampfung in einem mehrstufigen VTE-Prozeß, wobei das Meerwasser nach Durchlaufen der ersten VTE-Prozeß-Stufe jeweils vor Eintritt in die nächstfolgende VTE-Prozeß-Stufe über eine Staustelle geführt und dabei in mindestens je einer MSF-Prozeß-Stufe einer Entspannungsverdampfung unterworfen wird, wobei das jeweilige Süßwasser-Destillat und das jeweilige Sole-Kondensat alle nachfolgenden VTE-Prozeß- und MSF-Prozeß-Stufen gemeinsam durchlaufen, derart, daß der letzten VTE-Prozeß-Stufe das Sole-Kondensat und der letzten MSF-Prozeß-Stufe das Süßwasser-Destillat entnommen werden können, wobei der zur Aufheizung des Meerwassers dienende Dampf mit der ersten VTE-Prozeß-Stufe beginnend durch alle Verdampfungsstufen nacheinander geführt und dabei mit dem Dampfanteilen zumindest aus den anfänglichen VTE-Prozeß-Stufen vermischt wird und wobei die in jeder Prozeßstufe ($FS_t$) anfallenden Inertgase in der entsprechenden Stufe ($VSt_n$) des Rohwasser-Vorwärmers (VW) abgesaugt werden,
dadurch **gekennzeichnet,**
daß der in der letzten VTE-Prozeß-Stufe ($FSt_3$) entstandene Kondensat- bzw. Brüdendampf abgesaugt, von Sole-Kondensat gereinigt und verdichtet wird, daß in den überhitzten Dampf Wasser eingespritzt wird, bis der gesättigte Zustand erreicht ist, und daß der gesättigte Dampf mit dem für die erste VTE-Prozeß-Stufe ($FSt_1$) ausgelegten Temperatur- und Druckniveau der ersten VTE-Prozeß-Stufe ($FSt_1$) wiederzugeleitet wird, und
daß das Süßwasser-Destillat und die Inertgase in der gleichen Strömungsrichtung mit dem aus Destillat- bzw. Kondensat- und Primärdampf bestehenden Restdampf aus den jeweiligen VTE-Prozeß-Stufen ($FSt_{1-3}$) abgeleitet werden.

2. Verfahren nach Anspruch 1,
dadurch **gekennzeichnet,**
daß der Brüdendampf je nach der geforderten Leistung der Gesamtanlage in mehreren parallel geschalteten gleichen Verdichterstufen verdichtet wird.

3. Verfahren nach Anspruch 1,
dadurch **gekennzeichnet,**
daß der Produktdampf zwischen den einzelnen VTE-Prozeß-Stufen von Sole-Kondensat gereinigt wird.

4. Verfahren nach Anspruch 1,
dadurch **gekennzeichnet,**
daß das Süßwasser-Destillat und das Gemisch aus Inertgasen und Restdampf über eine Gefällestrecke zu einer entsprechenden Stufe ($VSt_{1-3}$) des Rohwasser-Vorwärmers (VW) abgeleitet werden, wobei durch das Gefälle eine Trennung von Destillat und dem Gemisch aus Restdampf und Inertgasen erfolgt.

5. Verfahren nach Anspruch 4,
dadurch **gekennzeichnet,**
daß das Süßwasser-Destillat über die Gefällestrecke in einer Produkttasche (34) und das Gemisch aus Restdampf und Inertgasen in die entsprechende Stufe (VSt$_1$) des Rohwasser-Vorwärmers (VW) geleitet werden.

6. Verfahren nach einem der Ansprüche 4 oder 5,
dadurch **gekennzeichnet,**
daß sich der Restdampf und die Inertgase aus der VTE-Stufe vor ihrem Eintritt in die Rohwasser-Vorwärmer-Stufe in einem Destillations-Entspannungsraum (33) mit dem Destillatdampf der vorausgehenden Stufe vermischen.

7. Vorrichtung zur Durchführung des Verfahrens nach einem der Ansprüche 1 bis 6, wobei sowohl der Rohwasser-Vorwärmer (VW) als auch der die VTE-Prozeß-Stufen umfassende Fallfilm-Verdampfer (FV) aus geprägten Wärmetauscherplatten bestehen, die in Längs- und Querrichtung rasterförmig ausgerichtete und gleichmäßig angeordnete Sicken aufweisen und die jeweils paarweise spiegelbildlich aufeinanderliegend derart zusammengefaßt sind, daß die in der einen Richtung orientierten Sik-ken eines Wärmetauscher-Plattenpaares rohr-ähnliche Kanäle bilden und die in der anderen Richtung orientierten Sicken mit der benach-barten Wärmetauscher-Platte des benachbar-ten Wärmetauscher-Plattenpaares spaltähnli-che Kanäle begrenzen, wobei die rohrähnlichen Kanäle vertikal ausgerichtet liegen und die Mantelflächen für die Filmverdampfung des zugeführten Rohwassers bilden, während die für die Heizdampfführung vorgesehenen Kanäle horizontal ausgerichtet liegen und in der geometrischen Mitte des Fallfilm-Verdampfers in einer sie miteinander verbindende prägungsfreie Zone münden, wobei zwischen der der letzten VTE-Prozeß-Stufe (FSt$_3$) nachge-schalteten Sammelkammer (50) für den Kondensat- bzw. Brüdendampf und dem Dampfeintrittsbereich der ersten VTE-Prozeß-Stufe (FSt$_1$) eine Rohrverbindung (51) mit wenigstens einem Verdichter (21) vorgesehen ist, derart, daß der Brüdendampf der ersten VTE-Prozeß-Stufe (FSt$_1$) mit dem für diese Stufe augelegten Temperatur- und Druckniveau zuleitbar ist,
dadurch **gekennzeichnet,**
daß auf der zum Rohwasser-Vorwärmer (VW) gelegenen Dampf-Eintrittsseite der jeweiligen VTE-Prozeß-Stufe wenigstens eine untere Spaltkanalreihe (29) gegenüber dem zugeführten Dampf (28) abgeschirmt ist, so daß Süßwasser-Destillat und das Gemisch aus Inertgasen und Restdampf in gleichgerichteter Strömung aus der prägungsfreien Zone (31) über diese Spaltkanalreihe (29) ableitbar sind.

8. Vorrichtung nach Anspruch 7,
dadurch **gekennzeichnet,**
daß auf der Druckseite des Verdichters (21) eine Einrichtung (22) zum Einspritzen von Wasser in die Rohrleitung (51) bzw. in den Dampfeintrittsbereich der ersten VTE-Prozeß-Stufe (FSt$_1$) vorgesehen und mit der Rohrleitung und/oder der VTE-Prozeß-Stufe verbunden ist.

9. Vorrichtung nach Anspruch 7,
dadurch **gekennzeichnet,**
daß zwischen der Sammelkammer (50) und dem Verdichter (21) eine Dampfreinigungseinrichtung (49), insbesondere ein Demistor vorgesehen ist.

10. Vorrichtung nach Anspruch 7,
dadurch **gekennzeichnet,**
daß drei übereinander angeordnete, dem Rohwasser-Vorwärmer (VW) zugewandte untere Spaltkanalreihen (29) gegenüber dem zugeführten Produktdampf (28) abgeschirmt sind.

11. Vorrichtung nach einem der Ansprüche 7 bis 10,
dadurch **gekennzeichnet,**
daß sich an die unteren spaltähnlichen Kanäle (29) ein nach unten geneigtes Leitblech (32) anschließt, welches mit dem zur Abschirmung der unteren spaltähnlichen Kanäle der nächsten VTE-Prozeß-Stufe dienenden Leitblech (37) verbunden ist und gleichzeitig der Einleitung des Dampfes in die nachfolgende Stufe (FSt$_{n+1}$) dient.

12. Vorrichtung nach einem der Ansprüche 7 bis 11,
dadurch **gekennzeichnet,**
daß der zwischen den Leitblechen und der entsprechenden Rohwasser-Vorwärmer-Stufe gebildete Destillat-Entspannungsraum (33) nach oben und nach unten durch Produkttaschen zum Auffangen des Süßwasser-Destillats aus den VTE-Prozeß-Stufen verschlossen ist.

13. Vorrichtung nach Anspruch 12,
dadurch **gekennzeichnet,**
daß die Produkttaschen (34, 38) untereinander durch Syphonleitungen (39) miteinander verbunden sind.

**14.** Vorrichtung nach einem der Ansprüche 7 bis 13,

dadurch **gekennzeichnet,**

daß die einzelnen VTE-Prozeß-Stufen ($FSt_{1,2,3}$) durch Syphonleitungen (40, 41, 42) miteinander in Verbindung stehen, derart, daß die maximale Höhe des Solespiegels begrenzbar ist.

**15.** Vorrichtung nach einem der Ansprüche 7 bis 14,

dadurch **gekennzeichnet,**

daß in der Strömungsbahn des Produktdampfes von einer VTE-Prozeß-Stufe ($FSt_n$) zur nachfolgenden VTE-Prozeß-Stufe ($FSt_{n+1}$) eine Dampfreinigungseinrichtung, insbesondere wenigstens ein Demistor (45, 46, 47, 48) vorgesehen ist.

**Claims**

**1.** A process for distilling fresh water from sea water by film evaporation in a multi-stage VTE process, with the sea water being led via a damming area after having passed through the first VTE process stage and before entering the next VTE process stage and being therein subjected to a flash distillation in at least one MSF process stage, wherein the respective fresh water distillate and the respective brine condensate pass together through all subsequent VTE process and MSF process stages in such a manner that the brine condensate can be removed from the last VTE process stage and the fresh water distillate from the last MSF process stage, wherein the steam serving for heating the sea water is guided subsequently through all evaporation stages starting with the first VTE process stage and is mixed therein with steam portions from at least the first VTE process stages and wherein the inert gases obtained in each process stage ($FS_t$) can be sucked off in the corresponding stage ($VSt_n$) of the raw water preheater (VW), **characterized in that**

the condensate or exhaust steam, respectively, obtained in the last VTE process stage ($FSt_3$) is sucked off, cleaned by brine condensate and compressed, that water is injected into the superheated steam until the saturated state has been reached and that the saturated steam is fed back with the temperature and pressure level determined for the first VTE process stage ($FSt_1$) to the first VTE process stage ($FSt_1$) and that the fresh water distillate and the inert gases are discharged in the same direction of flow as the residual steam consisting of distillate or condensate and primary steam, respectively, from the respective VTE process stages ($FSt_{1-3}$).

**2.** A process according to claim 1, **characterized in that**

the exhaust steam is compressed in several paralleled, equal compression stages depending on the required performance of the total installation.

**3.** A process according to claim 1 **characterized in that**

the product steam is cleaned by brine condensate between the individual VTE process stages.

**4.** A process according to claim 1, **characterized in that**

the fresh water distillate and the mixture of inert gases and residual steam is discharged via a gradient to a corresponding stage ($VSt_{1-3}$) of the raw water preheater (VW), wherein the distillate and the mixture of residual steam and inert gases are separated due to the gradient.

**5.** A process according to claim 4, **characterized in that**

the fresh water distillate is led via the gradient into a product pocket (34) and the mixture of residual steam and inert gases into the corresponding stage ($VSt_1$) of the raw water preheater (VW).

**6.** A process according to any of claims 4 or 5, **characterized in that**

the residual steam and the inert gases from the VTE stage mix with the distillate steam of the preceding stage in a distillation flash chamber (33) before entering the raw water preheater stage.

**7.** An apparatus for carrying out the process according to any of claims 1 to 6, wherein the raw water preheater (VW) as well as the falling film evaporator (FV) comprising the VTE process stages consist of embossed heat exchanger plates which comprise beads aligned longitudinally and transversely in a grid-like manner and arranged uniformly and which are combined to form pairs which are superimposed in a mirror-inverted way in such a manner that the beads of a pair of heat exchanger plates oriented in one direction define tube-like channels and the beads oriented in the other direction define slot-like channels with the adjacent heat exchanger plate of the adjacent pair of heat exchangers, wherein the tube-like channels are aligned vertically and define the surface areas for the film evaporation of the supplied raw water, whereas the channels provided for conducting the heating steam are aligned horizontally and lead into a non-embossed zone connecting them in the geometrical center of the falling film evaporator, wherein a tube connection (51) having at least one compressor (21) is provided for between the collecting chamber (50) provided for downstream of the last VTE process stage ($FSt_3$) for the condensate or exhaust steam, respectively, and the steam admission area of the first VTE process stage ($FSt_1$) in such a manner that the exhaust steam of the first VTE process stage ($FSt_1$) can be supplied with the termperature and pressure level determined for this stage, **characterized in that** at least one row of lower slot-like channels (29) is screened from the supplied steam (28) on the steam admission side of the respective VTE process stage facing the raw water preheater (VW), so that the fresh water distillate and the mixture of inert gases and residual steam can be removed in the same direction of flow from the non-embossed zone (31) via said row of slot-like channels (29).

8. An apparatus according to claim 7,
   **characterized in that**
   the pressure side of the compressor (21) is provided with a means (22) for injecting water into the conduit (51) or the steam admission area of the first VTE process stage ($FSt_1$), respectively, and connected with the conduit and/or the VTE process stage.

9. An apparatus according to claim 7,
   **characterized in that**
   a steam cleaning means (49), in particular a demister, is provided for between the collecting chamber (50) and the compressor (21).

10. An apparatus according to claim 7,
    **characterized in that**
    three superimposed rows of slot-like channels (29) facing the raw water preheater (VW) are screened from the supplied product steam (28).

11. An apparatus according to any of claims 7 to 10,
    **charaterized in that**
    the lower slot-like channels (29) are followed by a guiding plate (32) inclined downwards which is connected with the guiding plate (37) serving for screening off the lower slot-like channels of the next VTE process stage and which at the same time serves for introducing the steam into the next stage ($FSt_{n+1}$).

12. An apparatus according to any of claims 7 to 11,
    **characterized in that**
    the distillate flash chamber (33) defined between the guiding plates and the corresponding raw water preheating stage is closed to the top and to the bottom by product pockets for collecting the fresh water distillate from the VTE process stages.

13. An apparatus according to claim 12,
    **characterized in that**
    the product pockets (34, 38) are interconnected by siphon pipes (39).

14. An apparatus according to any of claims 7 to 13,
    **characterized in that**
    the individual VTE process stages ($FSt_{1,2,3}$) are interconnected via siphon pipes (40, 41, 42) in such a manner that the maximum height of the brine level can be limited.

15. An apparatus according to any of claims 7 to 14,
    **characterized in that**
    a steam cleaning means, in particular at least one demister (45, 46, 47, 48), is provided for in the flow path of the product steam from one VTE process stage ($FSt_n$) to the next VTE process stage ($FSt_{n+1}$).

**Revendications**

1. Procédé pour la production d'eau douce par distillation d'eau de mer par évaporation de film dans un procédé VTE à étages multiples, l'eau de mer, après avoir parcouru le premier étage du procédé VTE et chaque fois avant l'entrée dans l'étage suivant du procédé VTE, étant guidée via un point d'arrêt et étant soumise à une distillation éclair dans au moins un des étages du procédé MSF, le distillat d'eau douce respectif et le condensat de saumure respectif parcourant ensemble tous les étages des procédés VTE et MSF suivants, de façon que le condensat de saumure peut être pris de l'étage final du procédé VTE et le distillat d'eau douce de l'étage final du procédé MSF, la vapeur servant au chauffage de l'eau de mer étant successivement guidée à travers tous les étages d'évaporation, commençant au premier étage du procédé VTE, ladite vapeur étant mélangée avec les portions de vapeur provenant au moins des étages initials du procédé VTE, et les gaz inertes produits à chaque

étage de procédé (FS$_t$) étant aspirés à l'étage correspondant (VSt$_n$) du réchauffeur d'eau brute (VW),

**caractérisé en ce que**

la vapeur de condensat ou de buées produite dans le dernier étage du procédé VTE (FSt$_3$) est aspirée, liberée de condensat de saumure, et condensée, **que** de l'eau est injectée dans la vapeur surchauffée jusqu'à obtention de l'état saturé, **et que** la vapeur saturée ayant le niveau de temperature et de pression dimensionné pour le premier étage du procédé VTE (FSt$_1$) est ramenée au premier étage du procédé VTE (FSt$_1$),

**et que** le distillat d'eau douce et les gaz inertes sont évacués des étages du procédé VTE (FSt$_{1-3}$) correspondants dans le même sens d'écoulement et ensemble avec la vapeur résiduelle composée de vapeur de distillat et/ou de condensat et de vapeur primaire.

2. Procédé selon la revendication 1, **caracterisé en ce que** la vapeur de buées est condensée, suivant la puissance requise de l'ensemble de l'installation, dans plusieurs étages identiques de condensateur montés en parallèle.

3. Procédé selon la revendication 1, **caracterisé en ce que** la vapeur du produit est libérée de condensat de saumure entre les différents étages du procédé VTE.

4. Procédé selon la revendication 1, **caractérisé en ce que** le distillat d'eau douce et le mélange de gaz inertes et de vapeur résiduelle sont évacués via une partie inclinée vers un étage correspondant (VSt$_{1-3}$) du réchauffeur d'eau brute (VW), l'inclinaison effectuant une séparation du distillat et du mélange composé de vapeur résiduelle et de gaz inertes.

5. Procédé selon la revendication 4, **caractérisé en ce que** le distillat d'eau douce est guidé à un récipient de produit (34) via la partie inclinée, et que le mélange de vapeur résiduelle et de gaz inertes est conduit à l'étage correspondant (VSt$_1$) du réchauffeur d'eau brute (VW).

6. Procédé selon l'une des revendications 4 ou 5, **caractérisé en ce qu'**avant l'entrée à l'étage du réchauffeur d'eau brute la vapeur résiduelle et les gaz inertes de l'étage VTE se mélangent avec la vapeur de distillat de l'étage précédent dans une chambre de détente de distillation (33).

7. Dispositif pour la réalisation du procédé selon l'une des revendications 1 à 6, où aussi bien le réchauffeur d'eau brute (VW) que l'évaporateur du film tombant (FV) comportant les étages du procédé VTE sont constitués par des plaques d'échange thermique gaufrées ayant des moulures alignées de manière longitudinale et transversale en forme de grille et arrangées régulièrement, lesdites moulures étant réunies en paires superposées de manière inversée, de façon que les moulures d'une paire de plaques d'échange thermique orientées vers une direction forment des canaux ressemblant à des tubes et les moulures orientées vers l'autre direction délimitent ensemble avec la plaque d'échange thermique voisine de la paire voisine de plaques d'échange thermique des canaux ressemblant à des fentes, les canaux ressemblant à des tubes étant alignés verticalement et formant les nappes pour l'evaporation de film de l'eau brute amenée, alors que les canaux prévus pour la conduite de la vapeur de chauffage sont alignés horizontalement et débouchent au centre géométrique de l'évaporateur du film tombant dans une région non-gaufrée reliant lesdits canaux, un raccord à tubes (51) ayant au moins un condensateur (21) étant prévue entre le collecteur (50) de la vapeur de condensat ou de buées monté en aval du dernier étage du procédé VTE (FSt$_3$) et la région d'entrée de la vapeur du premier étage du procédé VTE (FSt$_1$), de façon que la vapeur de buées est ramenable au premier étage du procédé VTE (FSt$_1$) en ayant le niveau de temperature et de pression dimensionné pour cet ètage,

**caractérisé en ce qu'**au côté d'entrée de vapeur de l'étage correspondant du procédé VTE en face du réchauffeur d'eau brute (VW) au moins une rangée inférieure de canaux ressemblant à des fentes (29) est protégée contre la vapeur amenée (28), de sorte que du distillat d'eau douce et le mélange de gaz inertes et vapeur résiduelle peuvent être évacués de la région non-gaufrée (31) via ladite rangée de canaux ressemblant à des lentes (29) dans le même sens d'écoulement.

8. Dispositif selon la revendication 7, **caracterisé en ce que**, au côté de pression du condensateur (21), des moyens (22) pour l'injection de l'eau dans le tuyau (51) ou dans la region d'entrée de la vapeur du premier étage du procédé VTE (FSt$_1$) sont prévus et que ces moyens sont reliés au tuyau et/ou à l'étage du procédé VTE.

9. Dispositif selon la revendication 7, **caracterisé en ce qu'** un dispositif de purification de la vapeur (49), notamment un débrouilleur, est prévu entre le collecteur (50) et le condensateur (21).

10. Dispositif selon la revendication 7, **caractérisé en ce que** trois rangées inférieures de canaux ressemblant à des fentes (29) superposées et en face du réchauffeur d'eau brute (VW) sont protégées contre la vapeur du produit amenée (28).

11. Dispositif selon l'une des revendications 7 à 10, **caractérisé en ce qu'**un déflecteur (32) incliné vers le bas est adjacent aux canaux inférieurs ressemblant à des fentes (29), ledit déflecteur étant relié au déflecteur (37) prévu pour la protection des canaux inférieurs ressemblant à des fentes du prochain étage du procédé VTE, et servant en même temps à l'introduction de la vapeur dans l'étage suivant $(FSt_{n+1})$.

12. Dispositif selon l'une des revendications 7 à 11, **caractérisé en ce que** la chambre de détente du distillat (33) formée entre les déflecteurs et l'étage de réchauffeur d'eau brute correspondant est fermée vers le haut et vers le bas par des récipients du produit pour capter le distillat d'eau douce provenant des étages du procédé VTE.

13. Dispositif selon la revendication 12, **caractérisé en ce que** les récipients du produit (34, 38) sont interconnectés par des conduites à siphon (39).

14. Dispositif selon l'une des revendications 7 à 13, **caracterisé en ce que** les différents étages du procédé VTE $(FSt_{1,2,3})$ sont interconnectés par des conduites à siphon (40,41,42), de façon que la hauteur maximale du niveau de saumure est limitable.

15. Dispositif selon l'une des revendications 7 à 14, **caracterisé en ce que**, dans le parcours d'écoulement de la vapeur du produit d'un étage du procédé VTE $(FSt_n)$ à l'étage suivant du procédé VTE $(FSt_{n+1})$, un dispositif de purification de la vapeur, notamment au moins un débrouilleur (45,46,47,48), est prévu.

EP 0 245 405 B1

FIG. 1

12

FIG. 2

# FIG.3